# EUROPÄISCHE PATENTANMELDUNG

(11) **EP 4 620 903 A1**
(43) Veröffentlichungstag der Anmeldung: **24.09.2025**
(21) Anmeldenummer: 24020086.5
(22) Anmeldetag: 20.03.2024
(51) Int. Cl.: C01B 3/02, B01D 53/047, B01D 53/14, C01B 3/38, C01B 3/48, C01B 3/50, C01C 1/04

(54) **VERFAHREN UND ANLAGE ZUR HERSTELLUNG VON WASSERSTOFF UND/ODER AMMONIAK**

(71) Anmelder: Linde GmbH, 82049 Pullach (DE)
(72) Erfinder: Haselsteiner, Thomas, 82049 Pullach (DE); Kossmann, Andreas, 82049 Pullach (DE); Maier, Alexander, 82049 Pullach (DE)
(74) Vertreter: Fischer, Werner

(57) **Zusammenfassung**

Ein Verfahren zur Herstellung von Wasserstoff und/oder Ammoniak mit den folgenden Schritten wird vorgeschlagen: Bereitstellung eines ersten Synthesegasstroms, der Wasserstoff, Kohlenstoffmonoxid und Kohlenstoffdioxid aufweist, Bereitstellung eines zweiten Synthesegasstroms, der gegenüber dem ersten Synthesegasstrom (SG3) an Wasserstoff und Kohlenstoffdioxid angereichert und an Kohlenstoffmonoxid abgereichert ist, unter Verwendung des ersten Synthesegasstroms oder eines Teils hiervon, Bereitstellung eines ersten Wasserstoffstroms unter Verwendung von Wasserstoff des zweiten Synthesegasstroms und einer ersten Druckwechseladsorptionseinheit, und Bereitstellung eines Kohlenstoffdioxidstroms unter Verwendung von Kohlenstoffdioxid des zweiten Synthesegasstroms und mittels einer Kohlenstoffdioxidabtrenneinheit. Das Verfahren umfasst einen oder mehrere der folgenden Schritte a) bis c): a) Bereitstellung des ersten Synthesegasstroms unter Verwendung einer autothermen Reformierung oder Partialoxidation ohne vorgelagerte endotherme Reformierung, b) Bereitstellung des ersten Wasserstoffstroms stromab der Bereitstellung des Kohlenstoffdioxidstroms, und c) Bearbeitung eines stromab der Bereitstellung des ersten Wasserstoffstroms und des Kohlenstoffdioxidstroms verbleibenden ersten Restgasstroms (RG2) oder eines Teil hiervon unter Erhalt eines zweiten Wasserstoffstroms (HG2) und eines zweiten Restgasstroms mittels einer zweiten Druckwechseladsorptionseinheit. Eine Anlage zur Durchführung des Verfahrens wird ebenfalls vorgeschlagen.

## Beschreibung

### Gebiet

Die vorliegende Offenbarung betrifft ein Verfahren und eine Anlage zur Herstellung von Wasserstoff und/oder Ammoniak.

### Hintergrund

Mehr als 90 % des weltweit hergestellten Ammoniaks werden derzeit durch das Haber-Bosch-Verfahren produziert. Bei diesem werden Wasserstoff und Stickstoff unter hohen Temperaturen und Drücken in Gegenwart eines Eisenkatalysators zu Ammoniak umgewandelt. Dieser Prozess ist äußerst energieintensiv, mit einem typischen Energieverbrauch von 28 bis 49 GJ pro Tonne Ammoniak.

Zur Bereitstellung von Wasserstoff können bekanntermaßen unterschiedlichste kohlenwasserstoffhaltige Einsätze mittels geeigneter Verfahren, beispielsweise mittels Dampfreformierung, partieller Oxidation, Autothermreformierung oder einer Kombination dieser Verfahren umgesetzt werden. Bei allen diesen Verfahren fällt zumindest in einem Rauchgas Kohlenstoffdioxid an, das in konventionellen Verfahren zumindest zum Teil an die Atmosphäre abgegeben wird.

Neuerdings gewinnt die Gewinnung von sogenanntem blauem Wasserstoff an Bedeutung. Bei dieser wird angestrebt, durch geeignete Verfahrensschritte die Freisetzung von Kohlenstoffdioxid an die Atmosphäre so weit wie möglich zu vermeiden. Typischerweise wird das Kohlenstoffdioxid dabei mittels einer chemischen und/oder physikalischen Wäsche oder aus einem Vorproduktgemisch der genannten Verfahren abgetrennt. Nach seiner Abtrennung kann das Kohlenstoffdioxid verdichtet, aufgereinigt und/oder verflüssigt werden, bevor es beispielsweise einer Lagerstätte endgelagert wird. Dies wird auch als Sequestrierung bezeichnet.

Es besteht der Bedarf nach Verfahren zur Herstellung von Wasserstoff und/oder Ammoniak, die Nachteile bekannter Verfahren zumindest teilweise überwinden.

### Übersicht

Vor diesem Hintergrund werden Verfahren und Anlagen zur Herstellung von Wasserstoff und/oder Ammoniak mit den Merkmalen der unabhängigen Ansprüche vorgeschlagen. Ausgestaltungen sind jeweils Gegenstand der abhängigen Ansprüche und der nachfolgenden Beschreibung.

Die vorliegende Offenbarung betrifft die Herstellung von Ammoniak, aber auch die bloße Herstellung von Wasserstoff ohne weitere Umsetzung oder mit Umsetzung zu anderen Verbindungen als Ammoniak.

Das vorgeschlagene Verfahren zur Herstellung von Wasserstoff und/oder Ammoniak umfasst die folgenden Schritten, ist jedoch nicht hierauf beschränkt: Bereitstellung eines ersten Synthesegasstroms, der Wasserstoff, Kohlenstoffmonoxid und Kohlenstoffdioxid aufweist; Bereitstellung eines zweiten Synthesegasstroms, der gegenüber dem ersten Synthesegasstrom an Wasserstoff und Kohlenstoffdioxid angereichert und an Kohlenstoffmonoxid abgereichert ist, unter Verwendung des ersten Synthesegasstroms oder eines Teils hiervon; Bereitstellung eines ersten Wasserstoffstroms unter Verwendung von Wasserstoff des zweiten Synthesegasstroms und mittels einer ersten Druckwechseladsorptionseinheit; und Bereitstellung eines Kohlenstoffdioxidstroms unter Verwendung von Kohlenstoffdioxid des zweiten Synthesegasstroms und mittels einer Kohlenstoffdioxidabtrenneinheit.

Das vorgeschlagene Verfahren umfasst dabei ferner einen oder mehrere der folgenden Schritte a) bis c), ist jedoch auch hierauf nicht beschränkt: a) Bereitstellung des ersten Synthesegasstroms unter Verwendung einer autothermen Reformierung oder Partialoxidation ohne vorgelagerte endotherme Reformierung; b) Bereitstellung des ersten Wasserstoffstroms stromab der Bereitstellung des Kohlenstoffdioxidstroms; und c) Bearbeitung eines stromab der Bereitstellung des ersten Wasserstoffstroms und des Kohlenstoffdioxidstroms verbleibenden ersten Restgasstroms oder eines Teils hiervon unter Erhalt eines zweiten Wasserstoffstroms und eines zweiten Restgasstroms mittels einer zweiten Druckwechseladsorptionseinheit.

Insbesondere jeder der Schritte a) bis c) löst dabei ausgehend vom Stand der Technik allein oder in Kombination Probleme und bieten entsprechende Vorteile, die unten noch in größerem Detail erläutert sind. Schritt a) ist insbesondere deshalb vorteilhaft, weil hierdurch auf entsprechendes Equipment verzichtet werden kann und bestimmte Stoffströme der Anlage vorteilhaft genutzt werden können. Mittels Schritt b) ist insbesondere eine aufwendige Zwischenverdichtung entbehrlich. Schritt c) ermöglicht es, auf weitere, nachgelagerte Trennschritte zu verzichten.

In einer vorgeschlagenen Ausgestaltung umfasst das Verfahren den Schritt a), wobei der autothermen Reformierung oder der Partialoxidation ein Einsatzgasstrom, der einen oder mehrere Kohlenwasserstoffe enthält, ohne vorherige Reformierung zugeführt wird. Auf diese Weise kann insbesondere der erwähnte Verzicht auf eine entsprechende vorgelagerte Einheit realisiert werden.

In einer alternativ vorgeschlagenen Ausgestaltung umfasst das Verfahren ebenfalls den Schritt a), wobei jedoch eine adiabate Reformiereinheit verwendet wird und wobei der autothermen Reformierung oder der Partialoxidation ein Produktstrom der adiabaten Reformierung zugeführt wird. Auf diese Weise kann stromauf der autothermen Reformierung oder der Partialoxidation eine entsprechende Behandlung erfolgen, jedoch sind keine aufwendigen Wärmeübertragungsschritte erforderlich.

In einer vorgeschlagenen Ausgestaltung umfasst das Verfahren die Bereitstellung des zweiten Synthesegasstroms für die Konvertierung von Kohlenmonoxid zu Kohlenstoffdioxid und Wasserstoff unter Verwendung einer Wassergasshiftreaktion, insbesondere unter Verwendung einer Isotherm-, Hochtemperatur-, Mitteltemperatur- und/oder Niedertemperaturshift. Auf diese Weise lässt sich die Wasserstoffausbeute steigern und eine abtrennungswürdige Kohlenstoffdioxidkonzentration erreichen.

In einer vorgeschlagenen Ausgestaltung umfasst das Verfahren den Schritt c), wobei der zweite Wasserstoffstrom oder ein Teil hiervon einer thermischen und/oder stofflichen Verwertung unterworfen wird. Eine thermische Verwertung ist durch die weitgehende Freiheit des Wasserstoffstroms von Kohlenstoffdioxid aufgrund der Gewinnung mittels Druckwechseladsorption möglich. Seine Verbrennung führt daher nicht zu Kohlendioxidemissionen. Die stoffliche Verwertung kann insbesondere durch eine Rückspeisung stromauf der ersten Druckwechseladsorptionseinheit erfolgen, so dass der enthaltene Wasserstoff insbesondere weitgehend in den ersten Wasserstoffstrom überführt wird.

In einer vorgeschlagenen Ausgestaltung umfasst das Verfahren also die thermische und/oder stoffliche Verwertung in dem Verfahren selbst, so dass sich entsprechende Vorteile erzielen lassen. Der zweite Restgasstrom kann insbesondere zu einer Position stromauf der Bereitstellung des Kohlenstoffdioxidstroms zurückgeführt werden, so dass enthaltenes Kohlenstoffdioxid insbesondere in einen Kohlenstoffdioxidreinstrom überführt und anschließend beispielsweise sequestriert werden kann.

In einer vorgeschlagenen Ausgestaltung umfasst das Verfahren die Bereitstellung des ersten Wasserstoffstroms stromab der Bereitstellung des Kohlenstoffdioxidstroms (Schritt b). Zudem wird in allen Ausgestaltungen, insbesondere dann, wenn Kohlendioxid kryogen abgetrennt wird, stromauf der Kohlenstoffdioxidabtrenneinheit eine Trocknungseinheit bereigtestellt ist. Auf diese Weise kann, auch bei Rückführungen und dergleichen, ein Schutz, der insbesondere kryogen arbeitenden Kohlenstoffdioxidaufbereitungsschritte erzielt werden.

Die vorgeschlagene Anlage zur Herstellung von Wasserstoff und/oder Ammoniak ist zur Durchführung der folgenden Schritte eingerichtet: Bereitstellung eines ersten Synthesegasstroms, der Wasserstoff, Kohlenstoffmonoxid und Kohlenstoffdioxid aufweist; Bereitstellung eines zweiten Synthesegasstroms, der gegenüber dem ersten Synthesegasstrom an Wasserstoff und Kohlenstoffdioxid angereichert und an Kohlenstoffmonoxid abgereichert ist, unter Verwendung des ersten Synthesegasstroms oder eines Teils hiervon; Bereitstellung eines ersten Wasserstoffstroms unter Verwendung von Wasserstoff des zweiten Synthesegasstroms und mittels einer ersten Druckwechseladsorptionseinheit; und Bereitstellung eines Kohlenstoffdioxidstroms unter Verwendung von Kohlenstoffdioxid des zweiten Synthesegasstroms und mittels einer Kohlenstoffdioxidabtrenneinheit.

Die vorgeschlagene Anlage ist ferner zur Durchführung eines oder mehrerer der folgenden Schritte a) bis c) eingerichtet: a) Bereitstellung des ersten Synthesegasstroms unter Verwendung einer autothermen Reformierung oder Partialoxidation ohne vorgelagerte endotherme Reformierung; b) Bereitstellung des ersten Wasserstoffstroms stromab der Bereitstellung des Kohlenstoffdioxidstroms; und c) Bearbeitung eines stromab der Bereitstellung des ersten Wasserstoffstroms und des Kohlenstoffdioxidstroms verbleibenden ersten Restgasstroms oder eines Teil hiervon unter Erhalt eines zweiten Wasserstoffstroms und eines zweiten Restgasstroms mittels einer zweiten Druckwechseladsorptionseinheit.

Zu weiteren Merkmalen und Vorteilen einer entsprechenden Anlage und Ausgestaltungen hiervon sei auf die obigen Erläuterungen betreffend das erfindungsgemäß vorgeschlagene Verfahren und seine Ausgestaltungen ausdrücklich verwiesen, da diese hierfür in gleicher Weise gelten.

Entsprechendes gilt auch für eine Anlage, die gemäß einer Ausgestaltung der Erfindung dazu eingerichtet ist, ein Verfahren gemäß einer beliebigen Ausgestaltung der vorliegenden Erfindung durchzuführen.

### Zeichnungen

Ausführungsformen von hier vorgeschlagenen Lösungen werden nachfolgend rein beispielhaft unter Bezugnahme auf die beigefügte Zeichnung beschrieben, wobei
Figuren 1 bis 4 Vergleichsverfahren veranschaulichen; und
Figuren 5 bis 13 vorgeschlagene Ausgestaltungen von Verfahren veranschaulichen.

### Ausführungsformen

Die nachfolgend beschriebenen Ausführungsformen und Ausgestaltungen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale vorgeschlagener Verfahren und Vorrichtungen nicht abschließend und/oder beschränkend betrachtet werden.

Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Ansprüche oder als Beschränkungen von Äquivalenten hierzu zu betrachten sind, und dass andere Ausführungsformen verwendet und Änderungen vorgenommen werden können, ohne vom Umfang der Ansprüche abzuweichen.

Unterschiedliche Ausführungsformen können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus können andere Ausgestaltungen umfasst sein, die gegenwärtig nicht beansprucht sind, die aber in Zukunft beansprucht werden könnten, insbesondere wenn sie vom Umfang der unabhängigen Ansprüche umfasst sind.

Erläuterungen, die sich auf Vorrichtungen, Apparate, Anordnungen, Systeme usw. gemäß vorgeschlagenen Ausführungsformen beziehen, können auch für Verfahren, Prozesse, Methoden usw. gemäß anderen Ausführungsformen gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

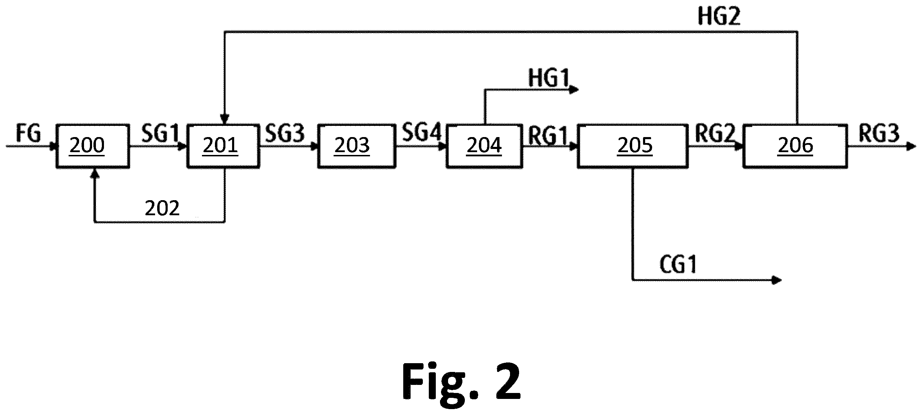

Verfahren zur Bereitstellung von Wasserstoff sind vielfach in der Literatur beschrieben. Statt vieler sei auf den Artikel von A.O. Oni et al., "Comparative assessment of blue hydrogen from steam methane reforming, autothermal reforming, and natural gas decomposition technologies for natural gas-producing regions", Energy Conversion and Management 254 (2022) 115245, verwiesen, der in den Figuren 2 bis 4 solche Verfahren zeigt und in den jeweils zugehörigen Textpassagen beschreibt.

Aus Produktgemischen entsprechender Verfahren abgetrenntes Kohlenstoffdioxid wird typischerweise verdichtet, gereinigt, d.h. insbesondere getrocknet, und anschließend entweder in gasförmigem Zustand auf Pipelinedruck verdichtet und/oder verflüssigt und flüssig auf Druck gebracht oder gepumpt und final sequestriert.

Zu Merkmalen von Verfahren zur Herstellung von Ammoniak wird auf einschlägige Fachliteratur verwiesen. Ein Beispiel ist der Artikel von M. Appl et al., "Ammonia, 2. Production Processes", in Ullmann's Encyclopedia of Industrial Chemistry, 15. Oktober 2021, https://doi.org/10.1002/14356007.o02_o11.

Die nachfolgenden Erläuterungen und Definitionen, die einige Grundlagen der Erfindung betreffen, können für alle oder einen Teil der hier vorgestellten Ausgestaltungen gelten, und die Erläuterung bestimmter Aspekte im Zusammenhang mit nur einem Teil oder einer der Ausgestaltungen soll nicht dahingehend verstanden werden, dass diese Aspekte nicht auch mit anderen oder allen Ausgestaltungen, soweit technisch möglich und sinnvoll, verwirklicht sein können.

Flüssige und gasförmige Stoffströme, Gasgemische oder dergleichen können im hier verwendeten Sprachgebrauch "reich" oder "arm" an einer oder mehreren Komponenten sein, wobei "reich" für einen Gehalt von wenigstens 50%, 75%, 90%, 95%, 99%, 99,5%, 99,9% oder 99,99% und "arm" für einen Gehalt von höchstens 50%, 25%, 10%, 5%, 1%, 0,1% oder 0,01% auf molarer, Gewichts- oder Volumenbasis stehen kann.

Flüssige und gasförmige Stoffströme, Gasgemische oder dergleichen können im hier verwendeten Sprachgebrauch ferner angereichert oder abgereichert an einer oder mehreren Komponenten sein, wobei sich diese Begriffe auf einen Gehalt in einem anderen Stoffstrom beziehen, unter Verwendung dessen der Stoffstrom gebildet wurde. Ein betrachteter Stoffstrom ist dabei "angereichert", wenn er zumindest den 2-fachen, 5-fachen, 10-fachen, 100-fachen oder 1.000-fachen Gehalt der bezeichneten Komponente(n) aufweist, und "abgereichert", wenn er höchstens den 0,5-fachen, 0,1-fachen, 0,01-fachen oder 0,001-fachen Gehalt der bezeichneten Komponente(n) aufweist, jeweils in Bezug auf den Stoffstrom, unter Verwendung dessen der betrachtete Stoffstrom gebildet wurde.

Unter Angaben wie "im Wesentlichen enthaltend" und dergleichen soll hier insbesondere verstanden werden, dass in einer damit beschriebenen Zusammensetzung, einem Stoffstrom usw. neben den als obligatorisch angegebenen bzw. sich aus der Bezeichnung des Gasgemischs (bspw. "Wasserstoff") ergebenden obligatorischen Bestandteilen weitere Komponenten enthalten sein können, sofern sich die wesentlichen Merkmale der damit bezeichneten Zusammensetzung durch diese nicht signifikant ändern. Entsprechendes gilt auch Angaben wie "im Wesentlichen frei von" und dergleichen. Ein "im Wesentlichen" eine oder mehrere Komponenten enthaltendes oder aus diesen bestehendes Gas bzw. Gasgemisch kann insbesondere diese Komponenten zu mehr als 95, 99, 99,9 oder 99,99% in Summe oder als Einzelwerte aufweisen. Umgekehrt ist ein Gas bzw. Gasgemisch "im Wesentlichen frei" von einer oder mehreren Komponenten, wenn es weniger als 5, 1, 0,1 oder 0,01% dieser Komponenten in Summe oder als Einzelwerte enthält. Entsprechend kann auch ein "Wasserstoffstrom" oder "Kohlendioxidstrom" im hier verstandenen Sinn gewisse Anteile an Fremdkomponenten aufweisen, wie sie beispielsweise für "im Wesentlichen frei" angegeben wurden.

Sämtliche hier verwendeten Prozentangaben können sich auf Mol-, Mass- oder Volumenanteile beziehen. Druckangaben in bar sind, soweit nicht anders erläutert, insbesondere als Absolutdrücke zu verstehen.

Die Konjunktion "und/oder" soll, wenn in einer Aufzählung vor dem letzten Begriff der Aufzählung verwendet, so verstanden werden, dass alle in der Aufzählung zuvor und danach genannten Begriffe beliebig miteinander kombiniert werden können. Mit anderen Worten ist mit "A, B und/oder C" "A und/oder B und/oder C" oder "wenigstens eines der Elemente A, B und C in beliebiger Kombination" gemeint.

Ist vorliegend von einem "Teil" eines Stoffstroms die Rede, kann es sich hierbei um einen Mengenanteil mit gleicher Zusammensetzung handeln, der von einem Ausgangsstrom lediglich abgezweigt wurde, aber auch um einen Anteil abweichender Zusammensetzung und ggf. nur eine Komponente des Ausgangsstroms, der mittels eines Verfahrens wie Kondensation, Evaporation, Sieden, Destillieren, Rektifizieren, Absorbieren, Adsorbieren, Flashen, Membrantrennen, Abscheiden oder dergleichen gebildet wird oder bei einem entsprechenden Schritt als Rest verbleibt. Ein "Teil" kann auch nach einer Kombination beliebiger der vorstehend benannten Schritte vorliegen, beispielsweise nach trenntechnischer Bearbeitung abgezweigten Anteils.

Die EP 3 954 650 A1 beschreibt ein Verfahren und eine Anlage zur Herstellung von Wasserstoff und Abscheidung von Kohlenstoffdioxid. Hier vorgeschlagene Ausgestaltungen werden dabei nachfolgend zum besseren Verständnis der jeweiligen Aspekte und Unterschiede unter Verwendung der auch in der EP 3 954 650 A1 verwendeten Bezugszeichen beschrieben.

Gemäß Patentanspruch 1 der EP 3 954 650 A1 wird ein Verfahren vorgeschlagen, welches einen endothermen Reformierungsschritt umfasst, welcher ein Synthesegas SG1 erzeugt. Ferner wird beschrieben, dass Kohlenstoffdioxid aus einem Restgas RG1 abgetrennt wird, welches einer Druckwechseladsorption zur Erzeugung von reinem Wasserstoff entspringt. Gemäß Patentanspruch 2 der EP 3 954 650 A1 wird ein Restgas RG2 einem Trennschritt (gemäß Anspruch 3 bevorzugt einem Membrantrennschritt) unterworfen. Dieser Trennschritt erzeugt ein wasserstoffreiches Gas HG2 und ein Restgas RG3. Gemäß Patentanspruch 5 der EP 3 954 650 A1 wird ein wasserstoffreicher Strom HG2 zum Heizen im autothermen Reformierungsschritt genutzt, welcher ein Synthesegas SG3 erzeugt. Entsprechend Patentanspruch 7 der EP 3 954 650 A1 wird ein zweiter Trennschritt etabliert, welcher aus dem Restgasstrom RG3 einen Kohlenstoffdioxidreichen Strom CG3, sowie einen Restgasstrom RG4 herstellt. Gemäß Anspruch 11 wird ein Restgas 1 (RG1) einer tiefkalten Abscheidung von Kohlenstoffdioxid unterzogen, wobei zumindest ein Verdichtunqsschritt, sowie zumindest ein Abkühlschritt genutzt wird. Hier vorgeschlagene Ausgestaltungen stellen vorteilhafte Weiterentwicklungen entsprechender Verfahren dar.

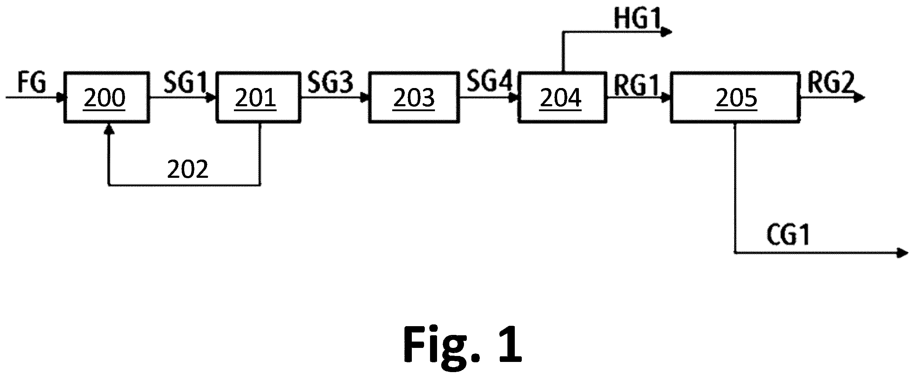

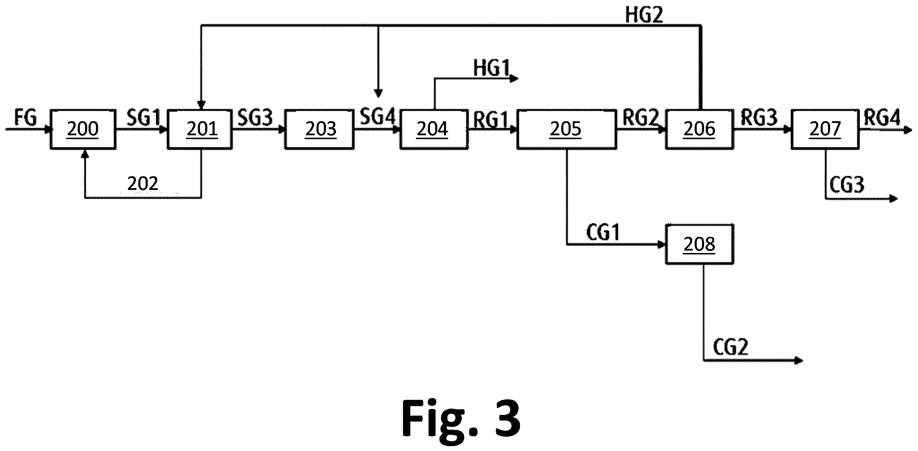

In Figur 1 ist ein Verfahren dargestellt, wie es beispielsweise dem Patentanspruch 1 der EP 3 954 650 A1 und einem Teil der dort in Figur 3 veranschaulichten Ausgestaltung entsprechen kann.

In dem Verfahren gemäß Figur 1 wird ein Einsatzgasstrom FG einer endothermen Reformierungseinheit 200 zugeführt und dort zu einem Synthesegasstrom SG1 umgesetzt. Der Synthesegasstrom SG1 wird in einer autothermen Reformierungseinheit 201 zu einem Synthesegasstrom SG3 umgesetzt. In der autothermen Reformierungseinheit 201 erzeugte Wärme wird zum Beheizen der endothermen Reformierungseinheit 200 genutzt, wie in Figur 1 durch einen Wärmestrom 202 veranschaulicht. Insbesondere kann der Synthesegasstrom SG3 unmittelbar zum Heizen in der endothermen Reformierungseinheit 200 genutzt werden, d.h. die in dem Synthesegasstrom SG3 enthaltene Wärme kann ohne weitere Übertragung auf ein Wärmetransportmedium zum Heizen in der endothermen Reformierungseinheit 200 genutzt werden.

Der Synthesegasstrom SG3 wird einer Konvertiereinheit 203 zugeführt, in der in dem ersten Synthesegasstrom SG3 enthaltenes Kohlenstoffmonoxid mit Wasserdampf zu Kohlenstoffdioxid und Wasserstoff umgesetzt wird. Ein dabei erhaltener, mit Wasserstoff angereicherter Synthesegasstrom SG4 wird nachfolgend einer Druckwechseladsorptionseinheit 204 zugeführt, um Wasserstoff aus dem dritten Synthesegasstrom SG4 mit hoher Reinheit abzutrennen.

In der Druckwechseladsorptionseinheit 204 abgetrennter Wasserstoff wird in Form eines Wasserstoffstroms HG1 aus der Druckwechseladsorptionseinheit 204 ausgeschleust. Ebenfalls wird ein an Wasserstoff abgereicherter Restgasstrom RG1 aus der Druckwechseladsorptionseinheit 204 abgezogen und einer Abscheideeinheit 205 zugeführt. In der Abscheideeinheit 205 wird Kohlenstoffdioxid durch mehrere Kompressions- und Abkühlschritte in hoher Reinheit abgeschieden und als Kohlenstoffdioxidstrom CG1 aus der Abscheideeinheit 205 abgezogen. Im hier verwendeten Sprachgebrauch erfolgt also eine Bereitstellung eines Wasserstoffstroms HG1 unter Verwendung von Wasserstoff des zweiten Synthesegasstroms SG4 und eine Bereitstellung eines Kohlenstoffdioxidstroms CG1 unter Verwendung von Kohlenstoffdioxid des zweiten Synthesegasstroms SG4 in der soeben ausführlich erläuterten Weise.

Der Kohlenstoffdioxidstrom Strom CG1 enthält noch signifikante Restmengen Methan, die optional durch Destillation des Kohlenstoffdioxidstroms CG1 entfernbar sind (in Figur 1 nicht gezeigt). Ein resultierendes reines Kohlenstoffdioxidprodukt eignet sich für die Sequestrierung des Kohlenstoffdioxids oder für eine Weiterverwendung, beispielsweise die Synthese von Methanol durch Umsetzung mit aus Elektrolyse erzeugtem Wasserstoff.

Aus der Abscheideeinheit 205 kann ein stark an Kohlenstoffdioxid abgereicherter weiterer Restgasstrom RG2 abgezogen werden, dessen weitere Behandlung in Figur 1 nicht gesondert veranschaulicht ist. Dieser kann beispielsweise einer Membrantrenneinheit zugeführt werden, in der ein gegenüber dem Restgasstrom RG2 an Wasserstoff angereicherter weiterer wasserstoffreicher Strom erzeugt und aus der Membrantrenneinheit abgezogen werden kann. Ferner kann ein gegenüber dem Restgasstrom an Wasserstoff abgereicherter weiterer Restgasstrom erzeugt und aus der Membrantrenneinheit abgezogen werden. Der weitere wasserstoffreiche Strom kann zur weiteren Verwendung optional entweder zur Druckwechseladsorptionseinheit 204 zur Steigerung der Gesamtwasserstoffausbeute des Prozesses zurückgeführt oder als Brenngas in der autothermen Reformierungseinheit 201 verwendet werden.

Nachteilig an dem in Figur 1 veranschaulichten Verfahren ist insbesondere, dass der Einsatz eines endothermen Reformierungsschrittes erforderlich ist, sowie dass der Restgasstrom RG1 auf sehr niedrigem Druck anfällt und daher stark verdichtet werden muss, um der Kohlenstoffdioxidabtrennung in der Abscheideeinheit 205 unterworfen werden zu können. Alternativ zu der veranschaulichten Ausgestaltung kann die Abtrennung von Kohlenstoffdioxid auch direkt aus dem dritten Synthesegasstrom SG4 erfolgen, welches bereits auf hohem Druck vorliegt.

In Figur 2 ist ein Verfahren dargestellt, wie es beispielsweise dem Patentanspruch 5 der EP 3 954 650 A1 entsprechen kann.

In dem in Figur 2 veranschaulichten Verfahren ist zusätzlich die bereits zu Figur 1 erwähnte Membrantrenneinheit 206 veranschaulicht, dem der Restgasstrom RG2 zugeführt wird. Auch der erwähnte, gegenüber dem Restgasstrom RG2 an Wasserstoff angereicherte weitere wasserstoffreiche Strom HG2 ist hier dargestellt, der aus der Membrantrenneinheit 206 abgezogen werden kann. Dieser wird, wie in Figur 2 dargestellt, aus der Membrantrenneinheit 206 abgezogen und der autothermen Reformierungseinheit 201 als Brenngas zugeführt. Alternativ kann dieser auch der Druckwechseladsorptionseinheit 204 zugeführt werden. Ferner ist in Figur 2 der bereits oben erwähnte, gegenüber dem Restgasstrom RG2 an Wasserstoff abgereicherte Restgasstrom RG3 dargestellt.

In Figur 3 ist ein Verfahren dargestellt, wie es beispielsweise dem Patentanspruch 7 der EP 3 954 650 A1 entsprechen kann.

Wie in Figur 3 veranschaulicht, kann hier eine weitere Membrantrenneinheit 207 zum Einsatz kommen, der der Restgasstrom RG3 zugeführt werden kann. Diese dient zur Abtrennung von Restkohlenstoffdioxid in einen weiteren Kohlenstoffdioxidstrom CG3 unter Verbleib eines weiteren Restgasstroms RG4. Ferner ist hier eine Rückfürung des aus der Membrantrenneinheit 206 abgezogenen weiteren wasserstoffreichen Stroms HG2 (auch) in die Druckwechseladsorptionseinheit 204 veranschaulicht. In Figur 3 ist ferner eine thermische Trenneinheit 208 veranschaulicht, der der Kohlenstoffdioxidstrom CG1 zugeführt wird, und in der, wie bereits oben erläutert, ein reiner Kohlenstoffdioxidstrom CG2 gewonnen werden kann.

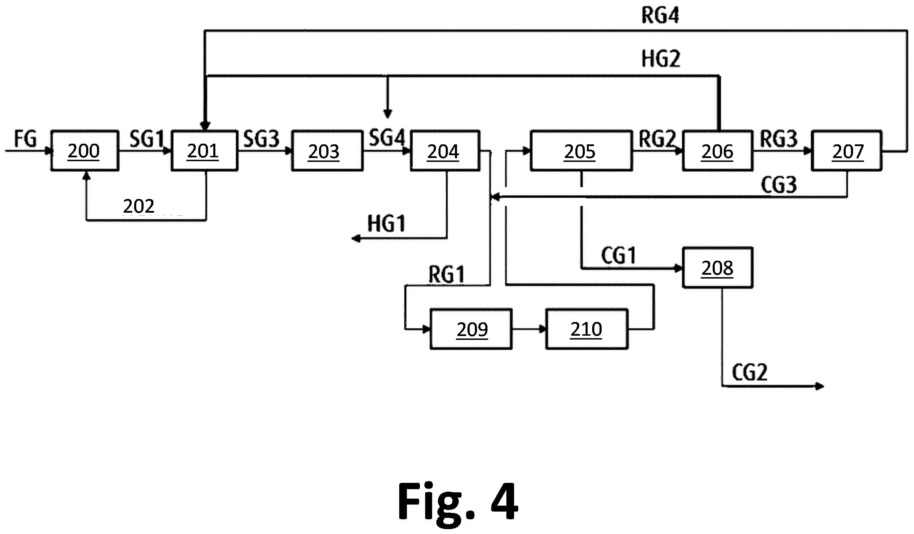

In Figur 4 ist ein Verfahren dargestellt, wie es beispielsweise dem Patentanspruch 11 der EP 3 954 650 A1 entsprechen kann.

Wie in Figur 4 veranschaulicht, wird der Restgasstrom RG1 hier einer Verdichtungseinheit 209 und danach einer Abkühleinheit 210 zugeführt, wobei der weitere Kohlenstoffdioxidstrom CG3 nach stromauf der Verdichtungseinheit 209 und nach stromab der Druckwechseladsorptionseinheit 204 zurückgeführt werden kann. Auf diese Weise kann eine Nutzung der thermischen Trenneinheit 208 auch für in dem weiteren Kohlenstoffdioxidreichen Strom CG3 enthaltenes Kohlenstoffdioxid erfolgen.

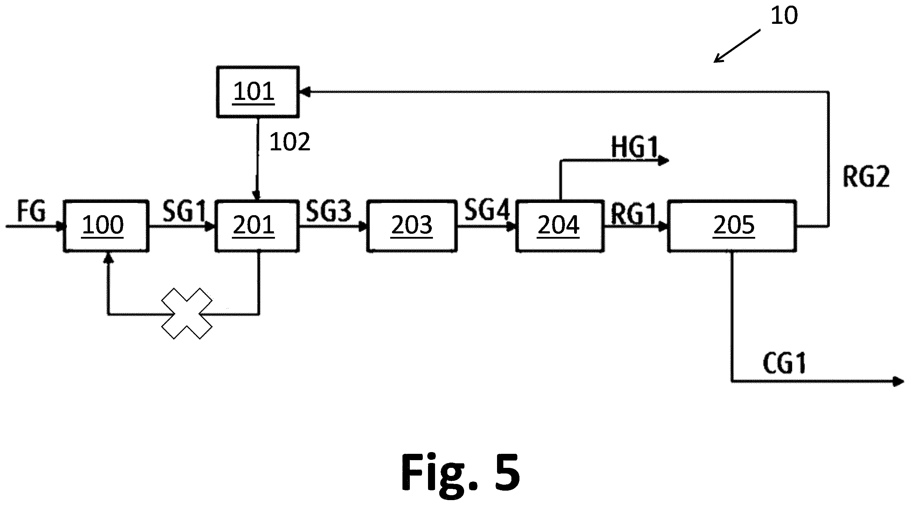

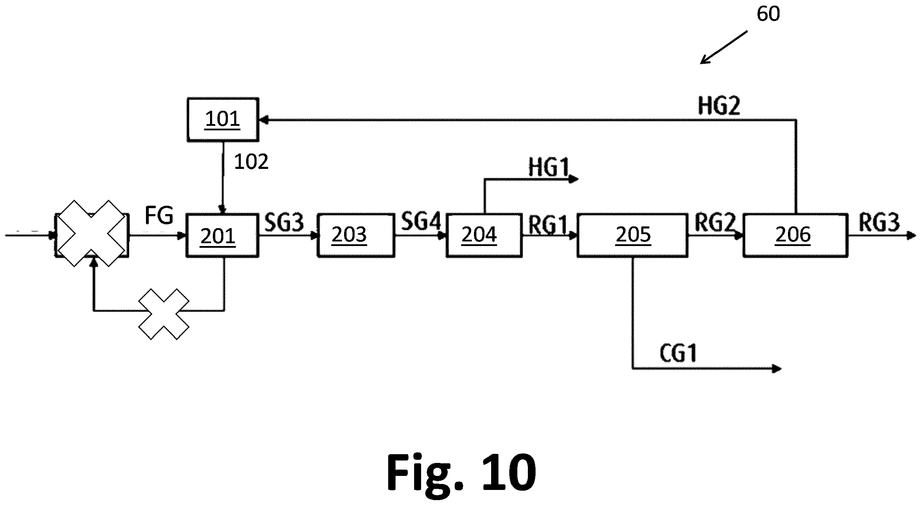

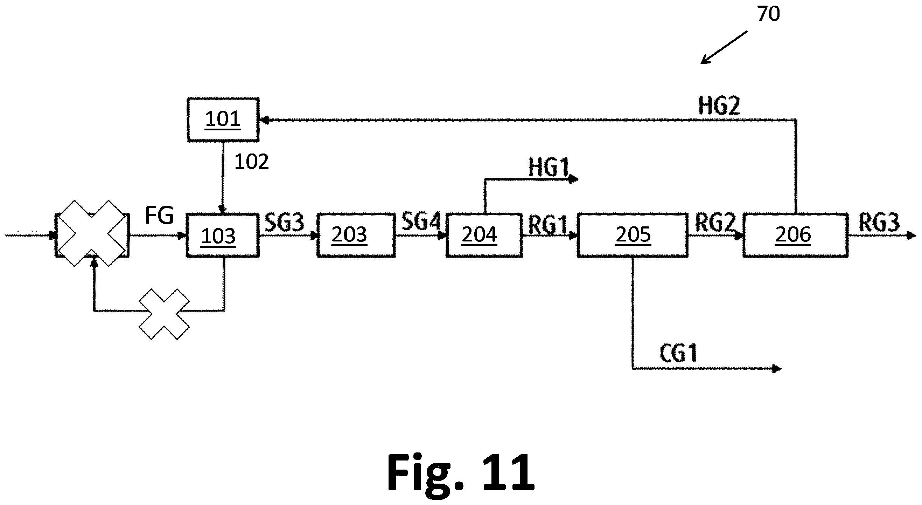

Hier vorgeschlagene Ausgestaltungen beruhen auf der überraschenden Erkenntnis, dass die in den Figuren 1 bis 4 veranschaulichten Verfahrensvarianten signifikant verbessert werden können. Dies wird anhand der nachfolgenden Figuren 5 bis 13 veranschaulicht und nachfolgend erläutert.

Zunächst werden dabei Verfahrensvarianten vorgestellt, die auf der überraschenden Erkenntnis beruhen, dass in den in den zuvor diskutierten Figuren veranschaulichten Verfahren nicht zwangsläufig ein endothermer Reformierungsschritt vorgesehen sein muss. Je nach Rahmenbedingungen kann ein solcher Schritt auch negative Auswirkungen auf die Effizienz, die Investitionskosten bzw. die Betriebskosten einer entsprechenden Anlage haben.

Ein in Figur 5 veranschaulichtes Verfahren, das insgesamt mit 10 bezeichnet ist, entspricht einer hier vorgeschlagenen Verfahrensvariante.

In dem Verfahren 10 wird dabei anstelle der endothermen Reformierungseinheit 200 der zuvor erläuterten Ausgestaltungen eine adiabate Reformierungseinheit 100 verwendet. Es wird kein Wärmestrom 202 von der autothermen Reformierungseinheit 201 in die adiabate Reformierungseinheit 100 überführt, wie mit einem durchkreuzten Pfeil veranschaulicht. Die autotherme Reformierungseinheit 201 wird dabei unter anderem mittels Wärme eines Wärmestroms 102 beheizt, die mittels Verbrennung des Restgasstroms RG2 in einer Brennereinheit 101 erzeugt werden kann. Dieser Restgasstrom RG2 wird im Rahmen der vorliegenden Offenbarung zur besseren Bezugnahme insbesondere auch als "erster Restgasstrom" bezeichnet. Der Synthesegasstrom SG3 wird im Rahmen der vorliegenden Offenbarung zur besseren Bezugnahme insbesondere auch als "erster Synthesegasstrom" bezeichnet, und der Synthesegasstrom SG4 insbesondere auch als "zweiter Synthesegasstrom".

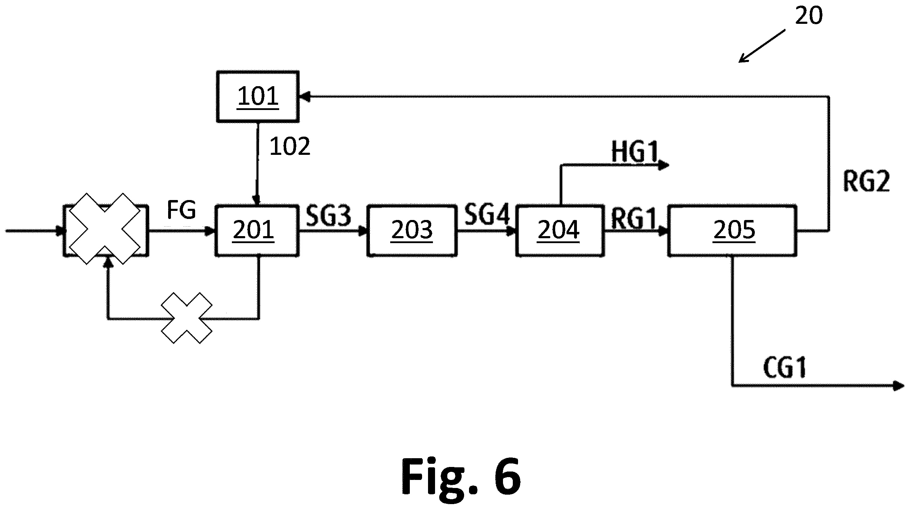

Ein in Figur 6 veranschaulichtes Verfahren, das insgesamt mit 20 bezeichnet ist, entspricht einer weiteren hier vorgeschlagenen Verfahrensvariante.

In dem Verfahren 20 wird auf die endotherme Reformierungseinheit 200 und die adiabate Reformierungseinheit 100 vollständig verzichtet, wie mit durchkreuzten Figurenelementen veranschaulicht.

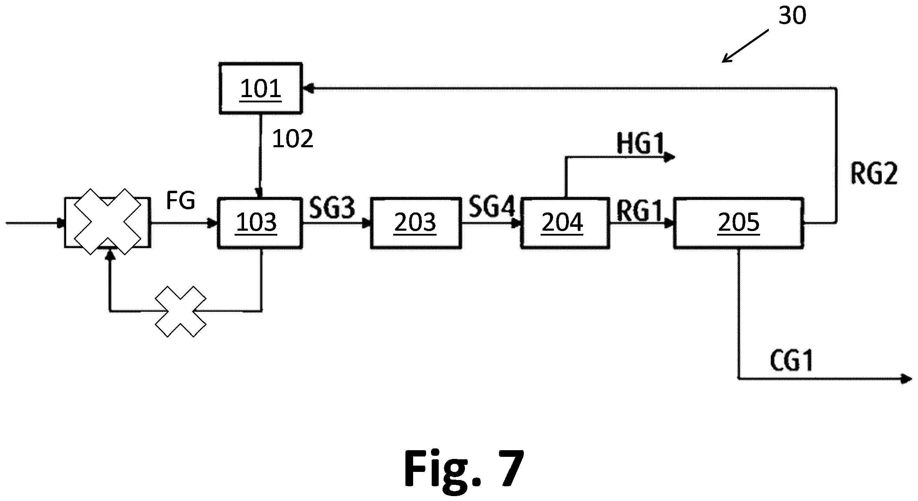

Ein in Figur 7 veranschaulichtes Verfahren, das insgesamt mit 30 bezeichnet ist, entspricht einer weiteren hier vorgeschlagenen Verfahrensvariante.

Das Verfahren 30 entspricht dem in Figur 6 veranschaulichten Verfahren 20, wobei jedoch zusätzlich die autotherme Reformierungseinheit 202 durch eine Partialoxidationseinheit 103 ersetzt ist, in der eine partielle Oxidation des Einsatzgasstroms FG vorgenommen wird.

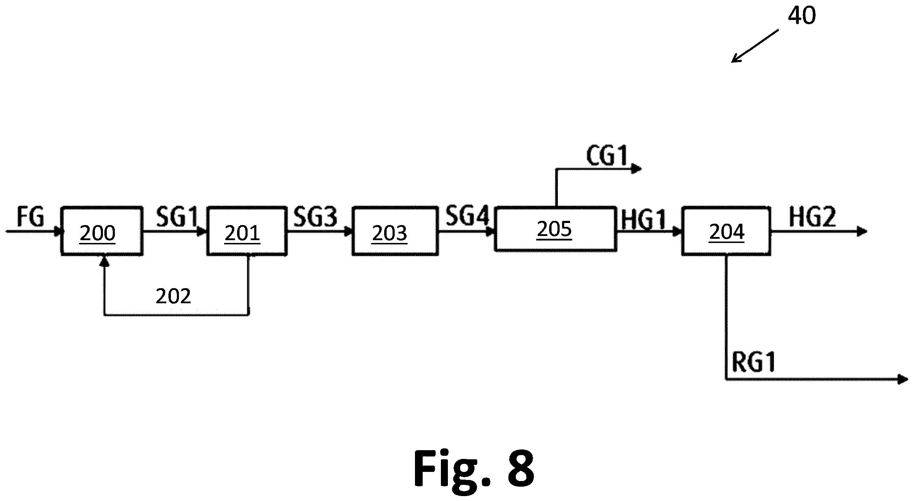

Ein in Figur 8 veranschaulichtes Verfahren, das insgesamt mit 40 bezeichnet ist, entspricht einer weiteren hier vorgeschlagenen Verfahrensvariante.

Das Verfahren 40 beruht auf einer Modifikation der zuvor erläuterten Verfahren dahingehend, dass eine Kohlenstoffdioxidabtrennung an anderer Stelle vorgenommen wird, d.h. insbesondere die Positionen der Abscheideeinheit 205 und der Druckwechseladsorptionseinheit 204 vertauscht sind.

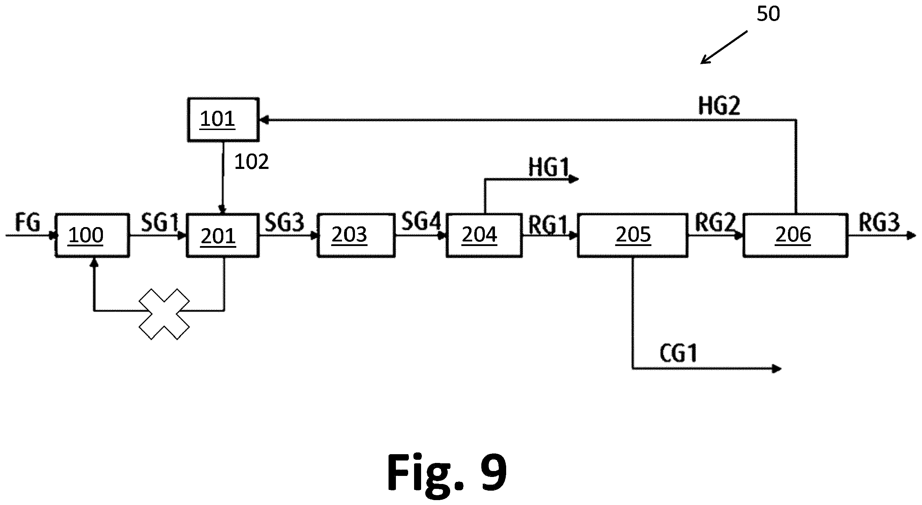

In Figuren 9 bis 11 veranschaulichte Verfahren, die insgesamt mit 50, 60 und 70 bezeichnet sind, entsprechen weiteren hier vorgeschlagenen Verfahrensvarianten.

Die Verfahren 50, 60 und 70 beruhen auf einer Modifikation des Verfahrens 40 mit den zu den Verfahren 10 und 20 beschriebenen Merkmalen und weiteren, bereits zuvor erläuterten Merkmalen, die nicht wiederholt erläutert werden. Die Funktionen ergeben sich jeweils aus den verwendeten Bezugszeichen.

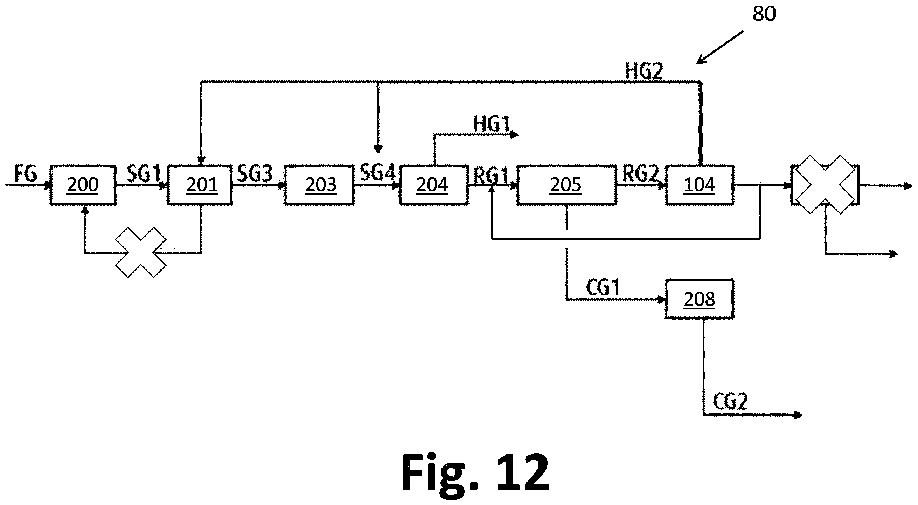

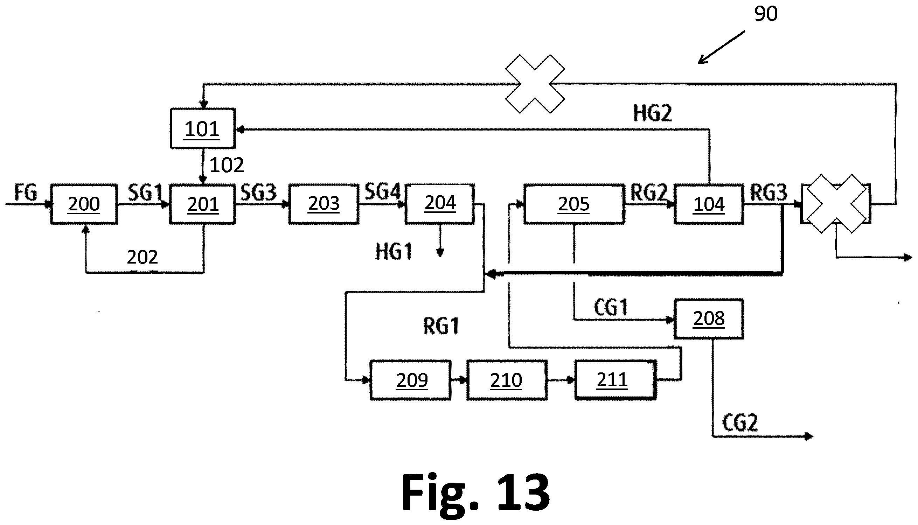

In Figuren 12 und 13 veranschaulichte Verfahren, die insgesamt mit 80 und 90 bezeichnet sind, entsprechen weiteren hier vorgeschlagenen Verfahrensvarianten.

Eine diesen Verfahren 80 und 90 gewonnene Erkenntnis ist die, dass auf die beispielsweise in Figur 3 veranschaulichte weitere (Membran-)Trenneinheit 207 verzichtet werden kann, wenn die Trenneinheit 206 als weitere Druckwechseladsorptionseinheit 104 ausgeführt wird.

Ein der weiteren Druckwechseladsorptionseinheit 104 entnommener, wie zuvor mit RG3 bezeichneter Restgasstrom kann ohne weitere Trennung direkt wieder zur Kohlenstoffdioxidabtrennung in die Abscheideeinheit 205 zurückführt werden. Dadurch wird zusätzlicher apparativer Aufwand vermieden. Um die in der Industrie typischerweise erforderlichen Abtrennraten zu erreichen, ist im Stand der Technik insbesondere vorgesehen, dass der wasserstoffreiche Strom HG2, welcher noch größere Mengen Kohlenstoffdioxid enthält, in den Hauptprozess rückgeführt wird, damit das enthaltene Kohlenstoffdioxid letztendlich wieder in der Kohlenstoffdioxidabtrennung landet. Durch diese Rückführung von HG2 in den Hauptprozess wird der Durchfluss durch die darin befindlichen Prozessschritte erhöht, und diese müssen größer ausgeführt werden. Zudem wird ein zusätzlicher Kompressor zur Druckerhöhung von HG2 benötigt (nicht dargestellt).

In dem Verfahren 90 wird dabei zusätzlich eine Trocknungseinheit 211 verwendet, die stromab der Abkühleinheit 210 und stromauf der Abscheideeinheit 205 angeordnet ist.

## Patentansprüche

1. Verfahren (10, 20, 30, 40, 50, 60, 70, 80, 90) zur Herstellung von Wasserstoff und/oder Ammoniak, mit den folgenden Schritten:
Bereitstellung eines ersten Synthesegasstroms (SG3), der Wasserstoff, Kohlenstoffmonoxid und Kohlenstoffdioxid aufweist;
Bereitstellung eines zweiten Synthesegasstroms (SG4), der gegenüber dem ersten Synthesegasstrom (SG3) an Wasserstoff und Kohlenstoffdioxid angereichert und an Kohlenstoffmonoxid abgereichert ist, unter Verwendung des ersten Synthesegasstroms (SG3) oder eines Teils hiervon;
Bereitstellung eines ersten Wasserstoffstroms (HG1) unter Verwendung von Wasserstoff des zweiten Synthesegasstroms (SG4) und mittels einer ersten Druckwechseladsorptionseinheit (204); und
Bereitstellung eines Kohlenstoffdioxidstroms (CG1) unter Verwendung von Kohlenstoffdioxid des zweiten Synthesegasstroms (SG4) und mittels einer Kohlenstoffdioxidabtrenneinheit (205),
wobei das Verfahren (10, 20, 30, 40, 50, 60, 70, 80, 90) einen oder mehrere der folgenden Schritte a) bis c) umfasst:
a) Bereitstellung des ersten Synthesegasstroms (SG3) unter Verwendung einer autothermen Reformierung (201) oder Partialoxidation (103) ohne vorgelagerte endotherme Reformierung (200);
b) Bereitstellung des ersten Wasserstoffstroms (HG1) stromab der Bereitstellung des Kohlenstoffdioxidstroms (CG1); und
c) Bearbeitung eines stromab der Bereitstellung des ersten Wasserstoffstroms (HG1) und des Kohlenstoffdioxidstroms (CG1) verbleibenden ersten Restgasstroms (RG2) oder eines Teils hiervon unter Erhalt eines zweiten Wasserstoffstroms (HG2) und eines zweiten Restgasstroms (RG3) mittels einer zweiten Druckwechseladsorptionseinheit (104).

2. Verfahren (20, 30, 60, 70) nach Anspruch 1, das den Schritt a) umfasst, wobei der autothermen Reformierung (201) oder der Partialoxidation (103) ein Einsatzgasstrom (FG), der einen oder mehrere Kohlenwasserstoffe enthält, ohne vorherige Reformierung zugeführt wird.

3. Verfahren (10, 50, 80) nach Anspruch 1, das den Schritt a) umfasst, wobei eine adiabate Reformiereinheit (200) verwendet wird und wobei der autothermen Reformierung (201) oder der Partialoxidation (103) ein Produktstrom (SG1) der adiabaten Reformierung (200) zugeführt wird.

4. Verfahren (10, 20, 30, 40, 50, 60, 70, 80, 90) nach einem der vorstehenden Ansprüche, bei dem die Bereitstellung des zweiten Synthesegasstroms (SG4) die Konvertierung von Kohlenmonoxid zu Kohlenstoffdioxid und Wasserstoff unter Verwendung einer Wassergasshiftreaktion umfasst.

5. Verfahren (80, 90) nach einem der vorstehenden Ansprüche, das den Schritt c) umfasst, wobei der zweite Wasserstoffstrom (HG2) oder ein Teil hiervon einer stofflichen und/oder thermischen Verwertung unterworfen wird.

6. Verfahren (80, 90) nach Anspruch 5, wobei die stoffliche und/oder thermische Verwertung in dem Verfahren (80, 90) erfolgt.

7. Verfahren (80, 90) nach Anspruch 5 oder Anspruch 6, bei dem der zweite Restgasstrom (RG3) zu einer Position direkt stromauf der Bereitstellung des Kohlenstoffdioxidstroms (CG1) zurückgeführt wird.

8. Verfahren (90) nach einem der Ansprüche 1 bis 7, wobei stromaufwärts der Kohlenstoffdioxidabtrenneinheit (205) eine Trocknungseinheit (211) bereitgtestellt ist.

9. Anlage zur Herstellung von Wasserstoff und/oder Ammoniak, die zur Durchführung der folgenden Schritte eingerichtet ist:
Bereitstellung eines ersten Synthesegasstroms (SG3), der Wasserstoff, Kohlenstoffmonoxid und Kohlenstoffdioxid aufweist;
Bereitstellung eines zweiten Synthesegasstroms (SG4), der gegenüber dem ersten Synthesegasstrom (SG3) an Wasserstoff und Kohlenstoffdioxid angereichert und an Kohlenstoffmonoxid abgereichert ist, unter Verwendung des ersten Synthesegasstroms (SG3) oder eines Teils hiervon;
Bereitstellung eines ersten Wasserstoffstroms (HG1) unter Verwendung von Wasserstoff des zweiten Synthesegasstroms (SG4) und mittels einer ersten Druckwechseladsorptionseinheit (204); und
Bereitstellung eines Kohlenstoffdioxidstroms (CG1) unter Verwendung von Kohlenstoffdioxid des zweiten Synthesegasstroms (SG4) und mittels einer Kohlenstoffdioxidabtrenneinheit (205),
wobei die Anlage ferner zur Durchführung eines oder mehrerer der folgenden Schritte a) bis c) eingerichtet ist:
a) Bereitstellung des ersten Synthesegasstroms (SG3) unter Verwendung einer autothermen Reformierung (201) oder Partialoxidation (103) ohne vorgelagerte endotherme Reformierung (200);
b) Bereitstellung des ersten Wasserstoffstroms (HG1) stromab der Bereitstellung des Kohlenstoffdioxidstroms (CG1); und
c) Bearbeitung eines stromab der Bereitstellung des ersten Wasserstoffstroms (HG1) und des Kohlenstoffdioxidstroms (CG1) verbleibenden ersten Restgasstroms (RG2) oder eines Teils hiervon unter Erhalt eines zweiten Wasserstoffstroms (HG2) und eines zweiten Restgasstroms (RG3) mittels einer zweiten Druckwechseladsorptionseinheit (104).

10. Anlage nach Anspruch 9, die zur Durchführung eines Verfahrens (10, 20, 30, 40, 50, 60, 70, 80, 90) nach einem der Ansprüche 1 bis 8 eingerichtet ist.
